# EUROPEAN PATENT SPECIFICATION

(11) **EP 1 472 609 B1**
(45) Date of publication and mention of the grant of the patent: **29.11.2006**
(21) Application number: 03700401.7
(22) Date of filing: 15.01.2003
(51) Int. Cl.: G06F 13/40, G06F 1/32

(54) **LOW-POWER BUS INTERFACE**
BUSSCHNITTSTELLE MIT NIEDRIGEM STROMVERBRAUCH
INTERFACE DE BUS BASSE PUISSANCE

(30) Priority: 17.01.2002 US 52277
(43) Date of publication of application: 03.11.2004
(73) Proprietor: Koninklijke Philips Electronics N.V., 5621 BA Eindhoven (NL)
(72) Inventor: JENSEN, Rune, H., NL-5656 AA Eindhoven (NL)
(74) Representative: Roche, Denis
(86) International application number: PCT/IB2003/000088
(87) International publication number: WO 2003/060736

(56) References cited:
- EP-A- 0 621 526
- US-A- 5 517 650
- US-A- 5 799 198
- US-A- 5 884 088
- "TECHNIQUE FOR MONITORING A COMPUTER SYSTEM'S ACTIVITY FOR THE PURPOSE OF POWER MANAGEMENT OF A DOS-COMPATIBLE SYSTEM" IBM TECHNICAL DISCLOSURE BULLETIN, IBM CORP. NEW YORK, US, vol. 33, no. 4, 1 September 1990 (1990-09-01), pages 474-477, XP000106498 ISSN: 0018-8689

## Description

### 1. Field of the Invention

This invention relates to the field of system and circuit design, and in particular, to a bus interface control structure that allows for low power consumption.

### 2. Description of Related Art

For ease of understanding, this invention is presented using the paradigm of an "initiator" of a bus transaction, and a "target" of the communications with the initiator. A functional component on the bus may be an initiator or a target, or both. A memory component, for example, is typically only a target, because a memory component does not generally initiate data transfers. A CPU in a single processor system, on the other hand is typically an initiator, because it generally determines what communications will take place. If, however, the CPU allows interrupts via the bus structure, it will be a target for the initiator of the interrupt. Note that, using this paradigm, the role as initiator and target is independent of the desired direction (read/write, transmit/receive) of data transfer.

Conventionally, a substantial amount of power consumption in a high-speed system is the power required for maintaining bus communications. Each initiator may be configured to enter a low-power mode until it is ready to initiate a communication, but each target must be continually ready to react to the initiated communication. In a high-speed system, each potential target continually samples the bus, to determine whether it is being addressed, and to receive the data without introducing a delay to the data transfer sequence from the initiator. This is particularly important in synchronous or near-synchronous bus designs, or pipe-lined designs, wherein each of the devices is assumed to operate in lock-step with each other to effect data transfers.

In a number of applications, data transfers via the bus are somewhat infrequent. A common technique for reducing the power consumed by the bus interfaces is to enter a low-power mode during periods of inactivity. The low-power mode is typically achieved by substantially reducing the speed of the clock that is used at the interfaces to the bus. Although this power-saving technique can substantially reduce the power used by the bus structure, it introduces a latency each time a bus transfer is initiated, while the clock is reset to its original high-speed operation.

The document EP 0 621 526 describes an apparatus and a method for powering up and powering down at least one peripheral element of a microcontroller or a microprocessor. The apparatus transforms a generally very active control signal into a power up/power down signal for at least one peripheral element. Suitable control signals are the address latch enable (ALE), the WRITE signal and the READ signal. Such an apparatus and method operates with unsatisfactory data-transfer latency.

### BRIEF SUMMARY OF THE INVENTION

It is an object of this invention to provide a system architecture and method that reduces power consumption. It is a further object of this invention to provide a system architecture that provides a low-power-consuming bus architecture that operates at high speed. It is a further object of this invention to provide a low-power-consuming bus structure that operates with minimal data-transfer latency.

These objects, and others, are achieved by providing a system architecture and method that is configured to disable the bus interface of target devices during periods of inactivity on a bus. A bus controller processes data and control signals from an initiator to establish an initiator-to-target communications path for data-transfer to or from the initiator. At the same time that the bus controller is processing the data and control signals, an activity detector notes the occurrence of the request from the initiator, and enables the bus interface on each of the targets. When the target signals a completion of the data-transfer operation, the activity detector notes the occurrence of the completion signal from target and disables the target interfaces of each target. To provide a substantial reduction in power consumption, the enabling and disabling of the target interfaces is effected by controlling the propagation of the clock system clock to each target interface. The single activity detector is continually active, to detect each data-transfer initiation as it occurs, and effectively eliminates the need for each of the individual target bus interfaces to perform this continual monitoring function.

### BRIEF DESCRIPTION OF THE DRAWINGS

The invention is explained in further detail, and by way of example, with reference to the accompanying drawings wherein:
FIG. 1 illustrates an example block diagram of a system that provides for minimal power consumption during periods of bus inactivity in accordance with this invention.
FIG. 2 illustrates an example flow diagram for data transfer via a system that provides for minimal power consumption during periods of bus inactivity in accordance with this invention.
FIG. 3 illustrates an example block diagram of a clock controller for providing a gated clock to bus interface devices in accordance with this invention.
Throughout the drawings, the same reference numerals indicate similar or corresponding features or functions.

### DETAILED DESCRIPTION OF THE INVENTION

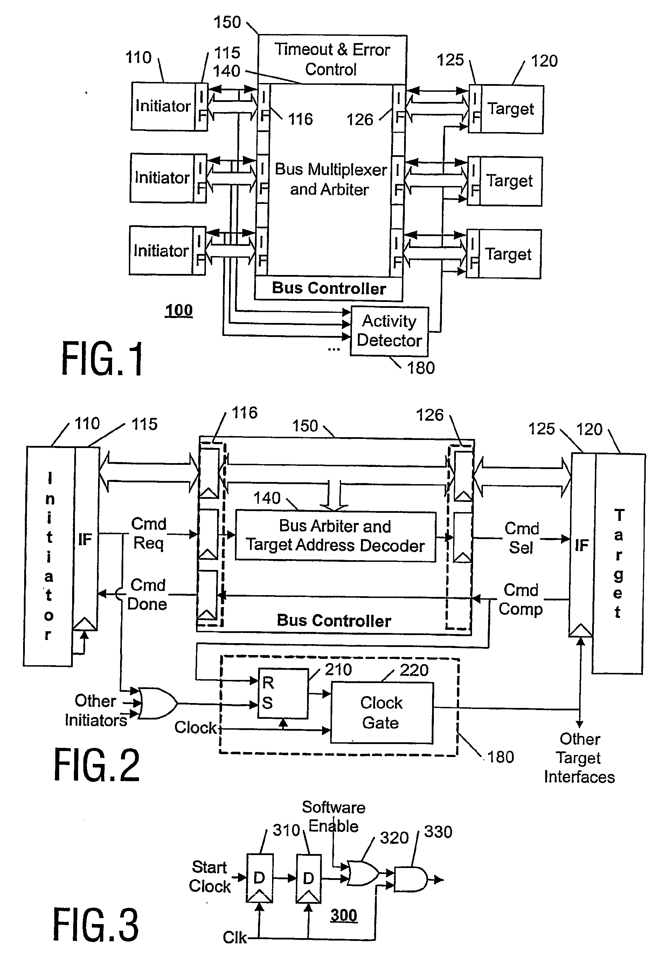

Fig. 1 illustrates an example block diagram of a system 100 that provides for minimal power consumption during periods of bus inactivity in accordance with this invention. The system 100 includes a plurality of functional components that communicate with each other via the bus structure. As noted above, the invention is presented using the paradigm of an initiator 110 of a bus transaction, and a target 120 of the communications with the initiator 110. A functional component may be an initiator 110 or a target 120, or may be both an initiator 110 and a target 120. As also noted above, the role as initiator 110 and target 120 is independent of the desired direction (read/write, transmit/receive) of data transfer.

Also for ease of reference, this invention is presented in the context of a bus structure that uses a centralized bus controller 150 that manages bus activities, including bus multiplexing and arbitration, timeout and error control, and so on. As will be evident to one of ordinary skill in the art, the principles of this invention are applicable to bus structures with distributed bus control, wherein, for example, the arbitration and multiplexing functions are achieved by having each component cooperate to minimize bus contention.

Bus architectures include both "broadcast" buses and "directed" buses. In a broadcast bus, multiple components are commonly connected directly to the bus, so that the data that is presented to the bus is available to each of the components. In a directed bus, the interface to the bus is via a multiplexer that selects which devices are connected to the bus at a given point in time. The example system 100 of FIG. 1 illustrates a bus structure that includes a directed bus for communications with the bus controller 150, although one of ordinary skill in the art will recognize that the principles of this invention are applicable as well to broadcast bus structures, or combinations of broadcast and directed bus structures.

Each of the components 110, 120 of the system 100 includes an interface adapter 115, 125, respectively, for communicating via the bus. The communications via the bus include data, which is indicated by the wide arrow symbols, and control signals, which are indicated by single width arrow symbols. Each interface adapter 115, 125 has a corresponding interface module 116, 126 at the bus controller 150.

In accordance with this invention, an activity detector 180 is configured to receive a notification that an initiator 110 has initiated a data-transfer process. Based on this notification, the activity detector enables the interfaces of each of the targets 120, in anticipation of the data-transfer request, and the associated command and data, being communicated to at least one of the targets 120.

In a conventional system, each target typically contains circuitry in its interface that continually monitors the bus for activity. The target may be configured to operate in a low-power mode until such activity is detected, but the circuitry in the interface must be configured to continually monitor the bus. For a variety of reasons, including decreased noise and transient sensitivity, the monitoring of the bus is achieved by periodically clocking registers that read the contents of the bus. As is known in the art, particularly in low-power CMOS designs, the power consumption of a system is substantially dependent upon the frequency of each clock in the system, and number of devices that are clocked by each of these clocks.

This invention is based on the observation that, substantial power savings can be achieved by providing a common activity detector 180 that enables each target 120 when activity is detected, rather than continually monitoring the bus for activity at each target 120.

In a preferred embodiment of this invention, the activity detector 180 is configured to inhibit the propagation of the system clock to the target devices interfaces 125. In this manner, the number of devices clocked by the system clock is substantially reduced. That is, rather than reducing the system clock frequency to reduce power consumption, the architecture of this invention reduces the number of devices clocked by the system clock, during periods of inactivity. Thus, provided that the typical system operation is characterized by periods of bus inactivity, substantial power savings can be achieved. Even if there is only one target 120, the common activity detector 180 will provide a power savings during inactive periods, because the typical interface 125 contains well over a dozen clocked registers for receiving the myriad assortment of control and data signals used to provide data-transfers, whereas, as presented further herein, an activity detector 180 of this invention may include fewer than two clocked devices. If there are multiple targets 120, the power savings provided by a single activity detector 180 is even greater.

To avoid latency caused by having to enable the targets after the activity detector 180 detects activity on the bus, the activity detector 180 is configured to receive a pre-notification of activity on the bus, before the targets 120 receive the initial commands or data from the initiator 110. If an explicit bus controller 150 is employed, there will be a predeterminable delay between the time that the initiation signal is received by the bus controller and the time that a particular target 120 is selected as the target of the transfer. In a preferred embodiment of this invention, the activity detector 180 receives the pre-notification signal at the same time that the bus controller 150 receives the bus request signal, and is configured to provide an up-to-speed activation of the target interfaces 125 within this predeterminable delay. If an explicit bus controller 150 is not used, each initiator 110 is configured to provide a pre-notification signal to the activity detector 180, before it communicates command or data information to the bus. This pre-notification signal is provided sufficiently ahead of the command and data information so as to allow the target interfaces 125 to be brought up-to-speed by the time that the command or data information arrive at the target interfaces 125.

Fig. 2 illustrates an example flow diagram for data transfer via a system that provides for minimal power consumption during periods of bus inactivity in accordance with this invention. The flow diagram illustrates a configuration of the system 100 of FIG. 1 during communications between an initiator 110 and a target 120. The example structure illustrated in FIG. 2 is presented for illustration purposes, and is intended to represent a fairly conventional control and data flow process, or protocol, wherein an initiator 110 initiates a communication by asserting a command-request control signal and the addressed target 120 acknowledges an execution of the command by asserting a command-complete control signal. Other communications protocols are common in the art, and the application of the principles of this invention to these other protocols will be evident to one of ordinary skill in the art in view of this disclosure.

In the configuration of Fig. 2, the initiator 110 simultaneously transmits a command-request control signal and a command to the bus controller 150, via the interface 115. The bus arbiter and address decoder 140 receives this information and allocates the bus to the initiator 110. At the same time, the arbiter and decoder 140 decodes a target address that is contained in the command, and asserts a command-select signal to the addressed target 120, which is received at the interface 125. The target 120 processes the command, typically a read or write data transfer command, which contains an indicated address within the target 120 for this data transfer. When the target 120 is ready to effect this command, the target 120 asserts a command-complete control signal to the bus controller 150 via the interface 125, which is subsequently communicated to the initiator 110, and received at the interface 115.

If the command is a write command, for transmitting data from the initiator 110 to the target 120, the data that is to be transmitted is presented at the interface 115 at the same time that the write command-request signal is asserted by the interface 115. The target 120 then accepts the data, which is present at the interface 126 when the corresponding command-select control signal is received at the interface 125, and asserts the command-complete control signal via the interface 125. Upon receipt of the corresponding command-done control signal at the interface 115, the initiator 110 is free to release the bus by deasserting the command-request control signal, and need no longer maintain the address and data signals at the interface 320.

If the command is a read command, for receiving data from the target 120 at the initiator 110, the data that is to be transmitted is presented at the interface 125 of the target 120 at the same time that the target 120 asserts the command-complete control signal at the interface 125. When the corresponding command-done signal is received at the interface 115 of the initiator 110, the initiator 110 accepts the data via the interface 115.

As detailed above, the flow illustrated in FIG. 2 provides an efficient data-throughput rate, by simultaneously providing control signals and data or commands corresponding to these control signals. To achieve this efficiency, each receiving interface must be operating at the system clock speed when the control signals and data and commands are available at the corresponding transmitting interface. As illustrated in FIG. 2, the interface 115 of the initiator 110 is configured to be controlled by the initiator 110; in this manner, consistent with conventional power-saving options, the interface 115 can be deactivated until the initiator 110 is ready to initiate a data-transfer operation. However, because the initiation of a data-transfer operation may occur at any time, the other interfaces 116, 126, 125 in a conventional system are operated continually, to detect the initiation.

In the flow diagram of FIG. 2, an activity detector 180 is configured to receive the command request control signal from the initiators 110. If any initiator 110 asserts a command request signal to initiate a data-transfer, the set-reset latch 210 is set. As detailed further below with regard to an example clock gate of Fig. 3, the clock gate 220 is configured to propagate the system clock to the target interfaces 125 when the input to this gate 220 is asserted. Provided that the propagation of the system clock through the activity detector 180 occurs within the time that the control signals and data and commands are propagated through the bus controller 150, the interface 125 of each target 120 will be operating at the system clock speed when the control signals and data and commands are available at the interface 126 of the bus controller 150.

When the target 120 signals a completion of the operation directed by the data-transfer command, the set-reset latch 210 is reset, or cleared. In response to this de-assertion, the clock controller inhibits the propagation of the system clock to the target interfaces 125, thereby reducing the power consumed after each data-transfer operation, as detailed above.

As will be evident to one of ordinary skill in the art, the principles of this invention are independent of the particular logic and structure of the activity detector 180 of Fig. 2. The function of the activity detector is to re-enable the bus interfaces 125 at each target 120 by the time that the control and data and commands arrive at the interfaces 125, and can be effected in any of a variety of means, and the function can be distributed among a variety of blocks. For example, each interface 125 could be configured to receive the system clock as a direct input, and the output of the gate 220 of Fig. 2 as an input. The gate 230 in this example would then be located in each of the target interfaces 125. By providing an ungated system clock and a clock-gating signal to each interface 125, each interface 125 can be selectively configured to use the power-saving option of this invention for some or all of the components in the particular target interface 125. For example, the registers in a particular interface 125 that are used for receiving control signals may be configured to use the ungated system clock, while the registers that are used for communicating data and commands may be configured to use the gated clock output of the gate 230 within the particular interface 125. In like manner, the enable-override gate 220 may be included in each target interface 125, so that each target 120 can be selectively placed in a low-power mode. If, for example, due to the particular placement of a target 120 in the layout of the system, the propagation delay of the clock-gating signal to the target 120 is excessive, this particular target 120 can be configured to forego the power-savings and remain in a continuous monitoring mode for more reliable operation. These and other system configuration and optimization options will be evident to one of ordinary skill in the art in view of this disclosure. For example, other components, such as select registers within the bus controller 150 may also be configured to be operated based on the clock-gating signal from the activity detector 180 to further reduce the power consumption of the system.

Fig. 3 illustrates an example block diagram of a clock controller 300 for providing a gated clock to bus interface devices in accordance with this invention. The controller 300 includes one or more delay devices 310 that propagate the clock enable signal to the gate 330 to enable the propagation of the input clock to the target interfaces. In a preferred embodiment of this invention, the clock controller 300 also includes a gate 320 that allows a propagation of the system clock via an external control, such as a software control.

Preferably, at least one delay element 310 is provided, to prevent 'glitches' from occurring on the gated-clock output of the controller 300. In the example controller 300 of FIG. 3, two delay elements 310 are illustrated, to provide a "double synchronization", to avoid loss of synchronization caused by a potential metastable input condition, primarily when the start-clock signal is deasserted. That is, the delays 310 are provided to assure that the target interfaces 125 are not disabled until both the initiator 110 and target 120 have completed the data-transfer operation.

The foregoing merely illustrates the principles of the invention as claimed in the appended claims. It will thus be appreciated that those skilled in the art will be able to devise various arrangements which, although not explicitly described or shown herein, embody the principles of the invention and are thus within the scope of the following claims.

## Claims

1. A system (100) comprising:
a plurality of initiators (110) that are configured to selectively initiate data-transfer operations, each of the plurality of initiators including a bus interface (115),
a plurality of targets (120) that are configured to process the data-transfer operations, each of the plurality of targets including a bus interface (125) for receiving the data-transfer operations,
a bus structure that is configured to facilitate communications between the initiators and the targets (110, 120), and
an activity detector (180) that is configured to detect an initiation of a data-transfer operation from any of the plurality of initiators and to provide therefrom an enabling signal that is communicated to the bus interface (125) of at least one of the plurality of targets (120),
the bus interface (125) of each of the plurality of targets is configured to be enabled to receive data from the bus structure upon receipt of the enabling signal from the activity detector (180),
**characterized in that** the activity detector (180) is configured to receive a pre-notification that an initiator (110) has initiated a data-transfer operation and enable the bus interface (125) of at least one of the plurality of targets (120) in anticipation of the data-transfer operations.

2. The system (100) of claim 1, wherein
the activity detector (180) is further configured to detect a completion of the data-transfer operation, and terminates the enabling signal based on the completion of the data-transfer operation, and
the bus interface (125) is configured to be disabled from receiving data from the bus structure upon termination of the enabling signal.

3. The system (100) of claim 1, wherein
the enabling signal includes a gated clock signal.

4. The system (100) of claim 1, wherein
the bus interface (125) includes a plurality of clocked devices that are clocked based on the enabling signal.

5. The system (100) of claim 1, wherein
the activity detector (180) includes:
a set-reset device (210) that is set upon detection of the initiation of the data-transfer operation, and
a delay device (310), operably coupled to the set-reset device (210), that is configured to provide the enabling signal synchronous with a system clock that is common to the bus structure, based on whether the set-reset device (210) is set.

6. The system (100) of claim 5, wherein
the set-reset device (210) is reset upon detection of a completion of the data-transfer operation.

7. The system (100) of claim 1, further including
a bus controller (150) that is configured to establish a communications path between the plurality of initiators (110) and the plurality of targets (120),
wherein
the activity detector (180) provides the enabling signal within a time duration consumed by the bus controller (150) to establish the communications path.

8. The system (100) of claim 7, wherein
the bus controller (150) includes one or more devices that operate in dependence up the enabling signal.

9. The system (100) of claim 1, wherein
a component (110) of the plurality of components (100) is configured to signal the initiation of the data-transfer operation to the activity detector (180) before the component (110) initiates the data-transfer operation via the bus structure.

10. The system (100) of claim 1, wherein
the plurality of initiators (110) are configured to effect the data-transfer operations at a system clock speed, and
the bus interface (125) of each of the plurality of targets (120) is configured to operate at the system clock speed only when the activity detector (180) provides the enabling signal.

11. The system (100) of claim 10, wherein
the enabling signal includes a clocking signal that operates at the system clock speed.

12. A method of reducing power consumption in a system (100) comprising a plurality of initiators (110) and a plurality of targets (120) that are configured to communicate via a bus structure, and an activity detector (180), comprising:
detecting an initiation of bus activity by at least one of the plurality of initiators (110),
communicating an enabling signal to at least one of the plurality of targets (120), and
enabling a bus interface (125) at each of the at least one of the plurality of targets (120) to receive signals corresponding to the bus activity, based on the enabling signal, **characterized in that** the method further comprises:
receiving at the activity detector (180) a pre-notification that an initiator (110) has initiated a data-transfer operation, and
enabling the bus interface (125) of at least one of the plurality of targets (120) in anticipation of the data-transfer operations.

13. The method of claim 12, further including
detecting a completion of the bus activity, and
disabling the bus interface (125) at each of the one or more other components, based on the completion of the bus activity.

14. The method of claim 12, further including
synchronizing the enabling signal to a system clock that is common to the bus structure.

15. The method of claim 12, further including
establishing a communications path between the component that initiated the bus activity and a target component of the one or more other components, and
enabling the bus interface (125) at the target component within a time duration required to establish the communications path.

## Patentansprüche

1. System (100) mit:
einer Vielzahl von Initiatoren (110), die dafür konfiguriert sind, selektiv Datenübertragungsoperationen zu initiieren, wobei jeder aus der Vielzahl von Initiatoren eine Busschnittstelle (115) enthält,
einer Vielzahl von Zielen (120), die dafür konfiguriert sind, die Datenübertragungsoperationen zu verarbeiten, wobei jedes aus der Vielzahl von Zielen eine Busschnittstelle (125) zum Empfangen der Datenübertragungsoperationen enthält,
einer Busstruktur, die dafür konfiguriert ist, die Kommunikation zwischen den Initiatoren und den Zielen (110, 120) zu erleichtern, und
einem Aktivitätsdetektor (180), der dafür konfiguriert ist, eine Initiierung einer Datentransferoperation von einem aus der Vielzahl von Initiatoren zu erkennen und daraus ein Aktivierungssignal bereitzustellen, das der Busschnittstelle (125) von mindestens einem aus der Vielzahl von Zielen (120) kommuniziert wird,
wobei die Busschnittstelle (125) von jedem aus der Vielzahl von Zielen dafür konfiguriert ist, aktiviert zu werden, um auf den Empfang des Aktivierungssignals vom Aktivitätsdetektor (180) hin Daten von der Busstruktur zu empfangen,
**dadurch gekennzeichnet, dass** der Aktivitätsdetektor (180) dafür konfiguriert ist, eine Vorbenachrichtigung dahingehend zu empfangen, dass ein Initiator (110) eine Datenübertragungsoperation initiiert hat, und im Vorgriff auf die Datenübertragungsoperationen die Busschnittstelle (125) von mindestens einem aus der Vielzahl von Zielen (120) zu aktivieren.

2. System nach Anspruch 1, wobei
der Aktivitätsdetektor (180) weiterhin dafür konfiguriert ist, eine Beendigung der Datenübertragungsoperation zu erkennen, und das Aktivierungssignal basierend auf der Beendigung der Datenübertragungsoperation beendet, und
die Busschnittstelle (125) dafür konfiguriert ist, bei Beendigung des Aktivierungssignals deaktiviert zu werden, um keine Daten von der Busstruktur mehr zu empfangen.

3. System (100) nach Anspruch 1, wobei
das Aktivierungssignal ein torgesteuertes Taktsignal umfasst.

4. System (100) nach Anspruch 1, wobei
die Busschnittstelle (125) eine Vielzahl von getakteten Vorrichtungen umfasst, die basierend auf dem Aktivierungssignal getaktet werden.

5. System (100) nach Anspruch 1, wobei
der Aktivitätsdetektor (180) Folgendes umfasst:
eine Set-Reset-Vorrichtung (210), die beim Erkennen der Initiierung der Datenübertragungsoperation gesetzt wird, und
eine Verzögerungsvorrichtung (310), die funktionsfähig mit der Set-Reset-Vorrichtung (210) gekoppelt ist und dafür konfiguriert ist, das Aktivierungssignal synchron mit einem Taktsignal bereitzustellen, das der Busstruktur gemeinsam ist, basierend darauf, ob die Set-Reset-Vorrichtung (210) gesetzt ist.

6. System (100) nach Anspruch 5, wobei
die Set-Reset-Vorrichtung (210) beim Erkennen einer Beendigung der Datenübertragungsoperation rückgesetzt wird.

7. System (100) nach Anspruch 1, das weiterhin Folgendes umfasst:
einen Bus-Controller (150), der dafür konfiguriert ist, einen Kommunikationspfad zwischen der Vielzahl von Initiatoren (110) und der Vielzahl von Zielen (120) aufzubauen,
wobei
der Aktivitätsdetektor (180) das Aktivierungssignal innerhalb einer Zeitdauer bereitstellt, die der Bus-Controller (150) braucht, um den Kommunikationspfad aufzubauen.

8. System (100) nach Anspruch 7, wobei
der Bus-Controller (150) eine oder mehrere Vorrichtungen umfasst, die in Abhängigkeit vom Aktivierungssignal arbeiten.

9. System (100) nach Anspruch 1, wobei
eine Komponente (110) der Vielzahl von Komponenten (100) dafür konfiguriert ist, dem Aktivitätsdetektor (180) die Initiierung der Datenübertragungsoperation zu signalisieren, bevor die Komponente (110) die Datenübertragungsoperation über die Busstruktur initiiert.

10. System (100) nach Anspruch 1, wobei
die Vielzahl von Initiatoren (110) dafür konfiguriert ist, die Datenübertragungsoperationen mit einer Systemtaktgeschwindigkeit durchzuführen, und
die Busschnittstelle (125) von jedem der Vielzahl von Zielen (120) dafür konfiguriert ist, nur dann mit Systemtaktgeschwindigkeit zu arbeiten, wenn der Aktivitätsdetektor (180) das Aktivierungssignal bereitstellt.

11. System (100) nach Anspruch 10, wobei
das Aktivierungssignal ein Taktsignal umfasst, das mit Systemtaktgeschwindigkeit arbeitet.

12. Verfahren zum Reduzieren des Stromverbrauchs in einem System (100) mit einer Vielzahl von Initiatoren (110) und einer Vielzahl von Zielen (120), die dafür konfiguriert sind, über eine Busstruktur zu kommunizieren, und mit einem Aktivitätsdetektor (180),
wobei das Verfahren Folgendes umfasst:
Erkennen einer Initiierung von Busaktivität durch mindestens einen aus der Vielzahl von Initiatoren (110),
Kommunizieren eines Aktivierungssignals an mindestens eines aus der Vielzahl von Zielen (120), und
Aktivieren einer Busschnittstelle (125) bei jedem des mindestens einen aus der Vielzahl von Zielen (120), um basierend auf dem Aktivierungssignal Signale zu empfangen, die der Busaktivität entsprechen,
**dadurch gekennzeichnet, dass** das Verfahren weiterhin Folgendes umfasst:
Empfangen einer Vorbenachrichtigung am Aktivitätsdetektor (180) dahingehend, dass ein Initiator (110) eine Datenübertragungsoperation initiiert hat, und
Aktivieren der Busschnittstelle (125) von mindestens einem aus der Vielzahl von Zielen (120) im Vorgriff auf die Datenübertragungsoperationen.

13. Verfahren nach Anspruch 12, das weiterhin Folgendes umfasst:
Erkennen einer Beendigung der Busaktivität, und
Deaktivieren der Busschnittstelle (125) bei jeder der einen oder mehreren anderen Komponenten basierend auf der Beendigung der Busaktivität.

14. Verfahren nach Anspruch 12, das weiterhin Folgendes umfasst:
Synchronisieren des Aktivierungssignals mit einem Systemtakt, der der Busstruktur gemeinsam ist.

15. Verfahren nach Anspruch 12, das weiterhin Folgendes umfasst:
Aufbauen eines Kommunikationspfades zwischen der Komponente, die die Busaktivität initiiert hat, und einer Zielkomponente der einen oder mehreren anderen Komponenten, und
Aktivieren der Busschnittstelle (125) an der Zielkomponente innerhalb einer Zeitdauer, die erforderlich ist, um den Kommunikationspfad aufzubauen.

## Revendications

1. Système (100) comprenant:
plusieurs initiateurs (110) qui sont configurés pour lancer sélectivement des opérations de transfert de données, chacun desdits plusieurs initiateurs incluant une interface de bus (115),
plusieurs cibles (120) qui sont configurées pour traiter les opérations de transfert de données, chacune desdites plusieurs cibles incluant une interface de bus (125) pour recevoir les opérations de transfert de données,
une structure de bus qui est configurée pour faciliter les communications entre les initiateurs et les cibles (110, 120), et
un détecteur d'activité (180) qui est configuré pour détecter le lancement d'une opération de transfert de données de n'importe lequel desdits plusieurs initiateurs et pour procurer à partir de là un signal d'activation qui est communiqué à l'interface de bus (125) d'au moins une desdites plusieurs cibles (120),
l'interface de bus (125) de chacune desdites cibles est configuré pour être activé pour recevoir des données de la structure de bus à la réception du signal d'activation du détecteur d'activité (180),
**caractérisé en ce que** le détecteur d'activité (180) est configuré pour recevoir une pré-notification de ce qu'un initiateur (110) a commencé une opération de transfert de données et active l'interface de bus (125) d'au moins une desdites plusieurs cibles (120) en anticipation des opérations de transfert de données.

2. Système 100 selon la revendication 1, dans lequel
le détecteur d'activité (180) est de plus configuré pour détecter une fin de l'opération de transfert de données, et terminer le signal d'activation sur base de la fin de l'opération de transfert de données, et
l'interface de bus (125) est configurée pour avoir sa réception de données de la structure de bus désactivée à la fin du signal d'activation.

3. Système (100) selon la revendication 1, dans lequel
le signal d'activation inclut un signal d'horloge appliqué par une porte.

4. Système (100) selon la revendication 1, dans lequel
l'interface de bus (125) inclut plusieurs dispositifs synchronisés qui sont cadencés par horloge sur base du signal d'activation.

5. Système (100) selon la revendication 1, dans lequel
le détecteur d'activité (180) inclut:
un dispositif activer-initialiser (210) qui est activé à la détection du début de l'opération de transfert de données, et
un dispositif a délai (310), fonctionnellement couplé au dispositif activer-initialiser (210), qui est configuré pour procurer le signal d'activation synchrone avec une horloge système qui est commune à la structure de bus, sur base de ce que le dispositif activer-initialiser (210) est ou non activé.

6. Système (100) selon la revendication 5, dans lequel
le dispositif activer-initialiser (210) est initialisé à la détection d'une fin de l'opération de transfert de données

7. Système 100 selon la revendication 1, incluant de plus
un contrôleur de bus (150) qui est configuré pour établir un chemin de communication entre lesdits plusieurs initiateurs (110) et lesdites plusieurs cibles (120),
dans lequel
le détecteur d'activité (180) procure le signal activation endéans une durée de temps consommée par le contrôleur de bus (150) pour établir le chemin de communication.

8. Système (100) selon la revendication 7, dans lequel
le contrôleur de bus (150) inclut un dispositif ou plus qui fonctionne en fonction du signal d'activation.

9. Système (100) selon la revendication 1, dans lequel
un composant (110) desdits plusieurs composants (100) est configuré pour signaler le début de l'opération de transfert de données au détecteur d'activité (180) avant que le composant (110) ne lance l'opération de transfert de données via la structure de bus.

10. Système (100) selon la revendication 1, dans lequel
lesdits plusieurs initiateurs (110) sont configurés pour effectuer les opérations de transfert de données à une vitesse d'horloge système, et
l'interface de bus (125) de chacune desdites plusieurs cibles (120) est configurée pour fonctionner à la vitesse d'horloge système seulement quand le détecteur d'activité 180 procure le signal d'activation.

11. Système (100) selon la revendication 10, dans lequel
le signal activation inclut un signal de synchronisation qui fonctionne à la vitesse d'horloge système.

12. Procédé de réduction de la consommation de puissance dans un système (100) comprenant plusieurs initiateurs (110) et plusieurs cibles (120) qui sont configurés pour communiquer via une structure de bus, et un détecteur d'activité (180) comprenant:
la détection d'un début d'activité de bus par au moins un desdits plusieurs initiateurs (110),
la communication d'un signal d'activation à au moins une desdites plusieurs cibles (120), et
l'activation d'une interface de bus (125) à chacune d'au moins une desdites plusieurs cibles (120) pour recevoir des signaux correspondant à l'activité de bus, sur base du signal activation, **caractérisé en ce que** le procédé comprend de plus:
la réception au détecteur d'activité (180) d'une pré-notification qu'un initiateur (110) a commencé une opération de transfert de données, et
l'activation de l'interface de bus (125) d'au moins une desdites plusieurs cibles (120) en anticipation des opérations de transfert de données.

13. Procédé selon la revendication 12, incluant de plus
la détection d'une fin de l'activité de bus, et
la désactivation de l'interface de bus (125) pour chacun d'un autre composant ou plus, sur base de la fin de l'activité de bus.

14. Procédé selon la revendication 12, incluant de plus
la synchronisation du signal d'activation à une horloge système qui est commune à la structure de bus.

15. Procédé selon la revendication 12, incluant de plus
l'établissement d'un chemin de communication entre le composant qui a commencé l'activité de bus et un composant cible d'un autre composant ou plus, et
l'activation de l'interface de bus (125) pour le composant cible endéans une durée de temps requise pour établir le chemin de communication.
